# EUROPEAN PATENT SPECIFICATION

(11) **EP 1 765 051 B1**
(45) Date of publication and mention of the grant of the patent: **03.12.2008**
(21) Application number: 04745128.1
(22) Date of filing: 28.06.2004
(51) Int. Cl.: A01B 79/00

(54) **A PROCESS TO IMPROVE THE NUTRIENT CONTENTS OF THE SOIL IN THE CULTIVATED LANDS**
VERFAHREN ZUR VERBESSERUNG DES NÄHRSTOFFGEHALTS DES BODENS BEI KULTURLAND
PROCEDE D'AMELIORATION DE TENEUR EN NUTRIMENTS DU SOL DANS LES TERRES CULTIVEES

(43) Date of publication of application: 28.03.2007
(73) Proprietor: Chinthala, Venkat Reddy, Hyderabad 500010 (IN)
(72) Inventor: Chinthala, Venkat Reddy, Hyderabad 500010 (IN)
(74) Representative: Chaillot, Geneviève
(86) International application number: PCT/IN2004/000185
(87) International publication number: WO 2006/001030

(56) References cited:
- DE-A1- 10 015 016
- RU-C1- 2 189 126
- SU-A1- 1 104 273

## Description

### FIELD OF INVENTION:

The present invention relates to the field of soil sciences and particularly to the improvement of essential nutrient elements in the soil for improved plant growth, lower irrigation needs due to better retention of water, higher plant yields, with no or reduced pest attack.

The present invention is directed to a process to enhance cereal production by restoring soil fertility of depleted soil systems. Depletion was viewed a result of human-induced soil degradation as a consequence of over fertilization by demands of intensive cropping practices in successive seasons, soil erosion due to natural factors, improper water management and continuous cropping. The present invention reduces the need for high inputs like chemical fertilizers and pesticides, restores inherent soil fertility, betters soil characteristics like Water Holding Capacity, clay content, low porosity resulting in high yields with better nutritive capability without unbalancing the fragile ecology of soil.

The present invention reduce the need for addition of high inputs like chemical fertilizers, restores soil fertility, better soil profiles and physical state and increases higher output of crop produce both in quantitative & qualitative terms.

### REFERENCES

Henry D. Foth, 1990, Fundamentals of Soil Science, 8th Edition, John Wiley & Sons Inc.
David Tilliman et al 2002, Agricultural Sustainability and intensive production practices, Nature 418,671-677.
Byeriee D 1996, Modem varieties, and sustainability-recent experience and emerging challenges, World Dev 24:697 - 718
Cassman, K.G., 1999, Ecological Intensification of Cereal Production Systems; yield potential, soil quality & precision agriculture. Pro. Natl Acad. USA 96, 5952-5959.
Pinstrop-Andersen and R.Pandya-Lorch, 1996. Food for all in 2020-can the world be fed without damaging the environment, Environ. Conserv. 23, 226-234
Cassman et al, 1993, Nitrogen use efficiency of irrigated rice: What are the key constrains, Plant Soil 155/156, 359-362
Patent No.2224398; Salanginas L.A; Satubaldin K.K.
Patent; US 20040050561; Lewellen, Dennis L.; et al; Method and apparatus for tilling an agricultural field.
Patent; US 6,695,892; Fischer,- et al.; Organic fertilizer having humic properties itsmethod of production and its use.
Patent; US 20040043445; Daniels, Ralph S., Oilseed extract products and uses.
Vyavasaya Panchangam, 2004-2005 (telugu lang. India), Compilation of cultivation methods 2004-05, Edited by Dr. D.Ramchandra Reddy et al, Acharya N.G.Ranga Agricultural Univeristy, Hyderabad, India, page no. 10, 14-15.

### BACKGROUND OF THE INVENTION:

The soil can be viewed as a mixture of mineral and organic particles of varying size and composition concerning plant growth. The particles occupy about 50% of the soil's volume. The remaining soil volume, about 50%, is pore space, composed of pores of varying shapes and sizes. The pore spaces contain air and water and serve as channels for the movement of air and water. Roots anchored in soil support plants and roots absorb water and nutrients. For good plant growth, the root-soil environment should be free of inhibitory factors. The three essential things that plants absorb from the soil and use are: (1) water that is mainly evaporated from plant leaves, (2) nutrients for nutrition, and (3) oxygen for root respiration.

Plants need certain essential nutrient elements to complete their life cycle. No other element can completely substitute for these elements. At least 16 elements are currently considered essential for the growth of most vascular plants. Carbon, hydrogen, and oxygen are combined in photosynthetic reactions and are obtained from air and water. These three elements compose 90% or more of the dry matter of plants. The remaining 13 elements are obtained largely from the soil. Nitrogen(N), phoshorus(P), potassium(K), calcium(Ca), magnesium(Mg), and sulfur(S) are required to as the macronutrients. Elements required in considerably smaller amount, called micronutrients, are boron(B), chlorine(Cl), copper(Cu), iron(Fe), manganese(Mn), molybdenum(Mo), and zinc(Zn). Cobalt (Co) is a micronutrient that is needed to only some plants.

In nature, plants accommodate themselves to the supply of available nutrients. Seldom or rarely is a soil capable of supplying enough of the essential nutrients to produce high crop yields for any reasonable period of time after natural or sub-soil lands are converted to cropland. Thus, the use of animal manures and other amendments to increase soil fertility (increase the nutrient ions) are ancient soil management practices. Reported in Fundamentals of Soil Sciences by Henry D. Foth. 8th Edition, 1990, John Wiley & Sons Inc.

Since these soils are cultivated for several times with seasonal crops continuously, the practice in recent times has been to increase the soil fertility or to increase the nutrient contents in the soil by using new organic and inorganic chemicals and products. The draw back of these products is that they supply only a specific nutrient content to the plants. In general, the plants require the nutrient contents in a conceptualization method. Therefore, it is known that soil with lower fertility levels, by over use of chemical fertilization can cause unbalance of organic matter, hardening of soil, and induces acceleration of destruction of organic matter. New incentives for ensuring higher productivity, improving quality of cereals without losses to soil ecosystems along with technology involving low input for farmers needs to be formulated if goals of sustainable agriculture of maximizing net benefits to society which it receives from agricultural production are to be harnessed (David Tilliman et al 2002, Nature 418 : 671 - 677)

Through the usage of these organic and inorganic products, it is evident that the food grains grown are with high chemical content, which is harmful to the mankind on continuous consumption.

To over take the usage of these chemical products many have searched for the new ways of cultivation or farming. The only alternative is to again cultivate in a new piece of land where the soil is sub-soil, which contains all the macro and micronutrients sufficiently. This method is highly impossible as to cultivate every time in a new piece of land involves the laborious activities of shaping the fields, canal formation, plucking the weeds etc., every time they enter into the new lands. Further, to cultivate in new lands it includes the expense of purchase of the land every time.

Facing this hurdle every time, it is an accepted practice to cultivate in the same land that they acquire for the purpose of farming/cultivation. And when they cultivate the land and grow the crop every time they use all chemicals organic and inorganic to safe guard the crop from low yielding, shortfall of growth of the plants, higher duration etc. through which they supply the artificial nutrients to the crop which are required.

Therefore, by cultivating the crops again and again in the same fields the farmers are now habituated their cultivation methods along with the usage of the chemical products which harm the mankind.

Thus, ecologically based management practices including practices for increasing efficiency, use of nitrogen, phosphorous, water for high crop yields is want of the day. This coupled with better nutritional levels of produce would help cope, the needs for health dimension of society. How can we accomplish dual objectives of improving yield levels and of preserving quality and quantity of ecosystem services provided by Earth's land and water resources along with low monetary inputs by grower? Several nations are providing incentives and policies in pursuit of sustainable agriculture (Byerlee D 1996. World Dev 24: 697 - 718). Major change in production parameters are being voiced in at global levels. (Cassman KG 1999, Proc. National academy of Sciences, USA. 96:5952-5952) as current practices of cultivation have induced losses related to environmental degradation especially soils, emergence of several biotic stresses and lowering of stability of production levels of cereals like rice and wheat. Several researchers are working new, viable technologies to overcome some of these problems. (Pinstrop-Andersen and R.Pandya-Lorch, 1996. Environ. Conserv.23, 226-234; Cassman et al 1993, Plant Soil 1551156,359-362; Patent no: RU 2224398;2004-02-27,EPO)

The inventor here has practiced a new process of increasing the nutrient content in the soil to gain the high value of natural resources. This also includes the new process of cultivation or farming before the irrigation by which the soil gets a new strength as it regains the lost nutrients completely.

DE-A-100 15 016 (D1) discloses a process of excavating a trench in a part of a field to a certain width and depth, sealing the bottom with clay, then mixing the excavated soil with shredded wood products and returning t to the trench.

U-C1-2 189 126 (D2) discloses a process of excavating a trench in a part of a field to a certain width and depth, filling the trench with topsoil from a different part of the field, and covering this with the excavated subsoil.

SU-A1-1 104 273 (D3) discloses a process of excavating a trench in a part of a field to a certain width and depth, lining the trench with waterproof film, and refilling the trench with soil.

### OBJECTIVES OF THE INVENTION:

The invention is a process of increasing the nutrient contents in the soil to gain the high value of natural resources. Through this process the inventor claims extensive benefits and advantages.
1. The advantage of the inventor's process of increasing the nutrient content in soil makes the soil to restore nutritive value to depleted soils.
2. Another advantage of the inventor's process of increasing the nutrient content in soil makes the soil to regain the new strength in the soil.
3. Another advantage of the inventor's process of increasing the nutrient content in soil involves the non-usage of any chemical fertilizers and other inorganic products.
4. Another advantage of the inventors process of increasing the nutrient content in soil involves extensive growth of the crop giving a very high yield.
5. Another advantage of the inventor's process of increasing the nutrient content in soil excludes the purchase of new land for every cultivation.
6. Another advantage of the inventor's process of increasing the nutrient content in soil is by not using or reduced usage of chemicals, the danger of contamination of ground water is solved.
7. Another advantage of the inventor's process of increasing the nutrient content in soil is getting high nutritive value of farm produce intern which reduces the need of diet supplements (artificial or natural).
8. Another advantage of the inventor's process of increasing the nutrient content in soil is to reduce the need of pesticides leading to safe farm produce with low toxicity levels.

Through the above advantages available to the mankind the inventor claims his invention as the novel, simple and useful to the every farmer/cultivator.

### SUMMARY OF THE INVENTION:

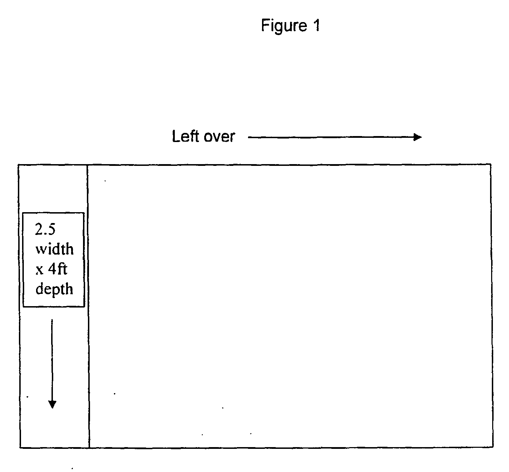

Excavation of sub-soil from a small portion of channel on one side of a field. The channel is 2.5 feet wide, 4 deep trench (fig.1) and soil excavated with proclainer. The topsoil to depth of 4" inches is scrapped and put into trench and covered. The excavated soil is spread on the field and basal dose of castor cake @1.4 tons /ha is applied. No chemical fertilizer as recommended by package of practices is added.

The inventor feels by this technique since there is no or reduced usage of chemicals, the danger of contamination of ground water which is a up-coming problem in this area is also reduced. It is a known fact that using chemical fertilizers increases the danger of chemicals getting leached into the ground water and tube well water in the areas, using the suggested methods of preparation the farmer strongly feels that natural resources are preserved, plants grow more vigorously due to better soil properties, texture, porosity, water holding capacity and due to high organic content built in the sub soil environment.

Thus increase in quantity and better quality produce is got by the farmer.

### DESCRIPTION OF THE DRAWINGS:

Figure 1 is the description of the trench in the starting year of the inventors process.
Figure 2 is the description of the trench made in the next successive cropping of the inventors process.

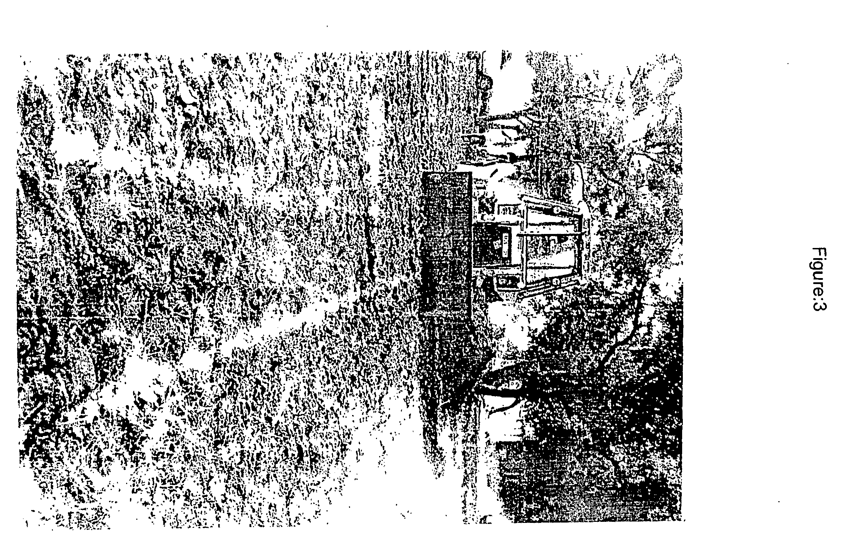

Figure 3 shows the marking of trench.
Figure 4 shows the trench is digged to a depth of 4 ft and 2½ showing the excavated soil and digged trench.

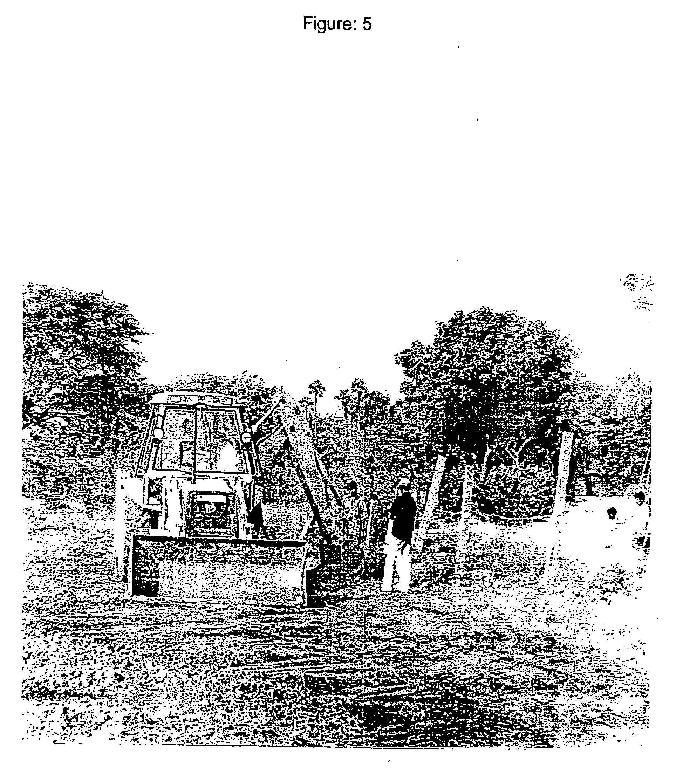

Figure 5 shows removal of top soil from the land/plot.
Figure 6 shows the difference in sample between excavated soil and topsoil.

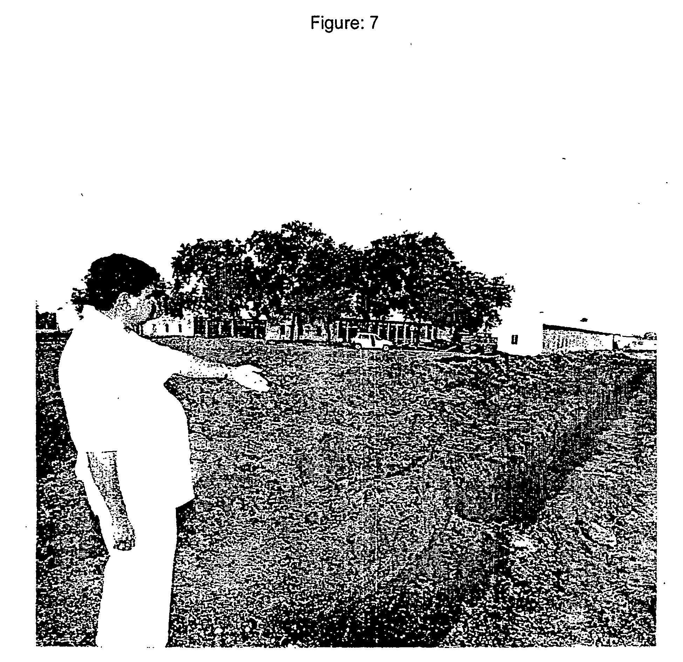

Figure 7 shows the empty trench with excavated soil at the side.

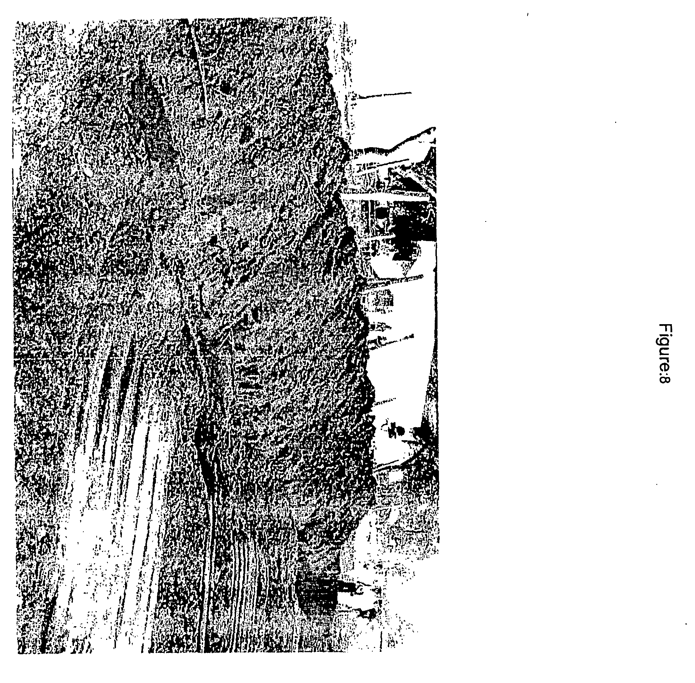

Figure 8 shows the filling of trench with topsoil.

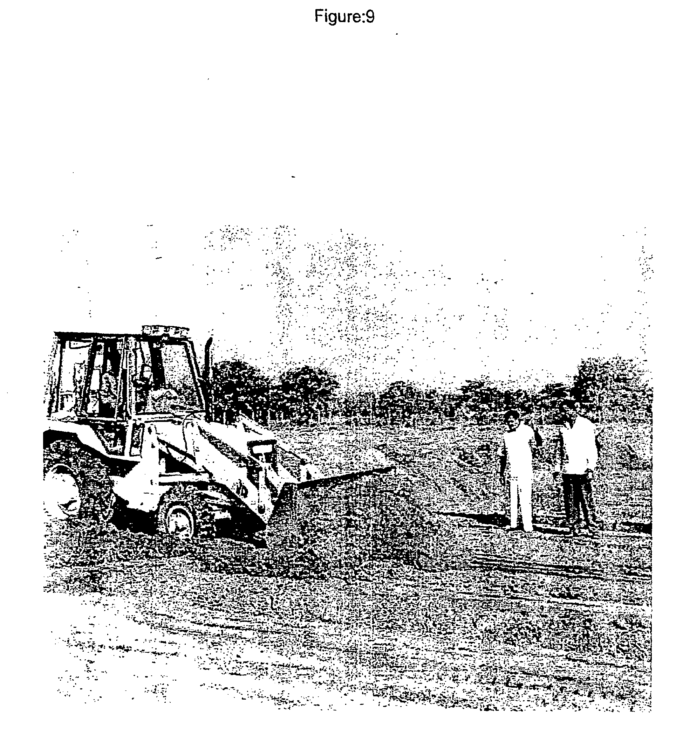

Figure 9 shows the spread of subsoil on the rest of the field/land.

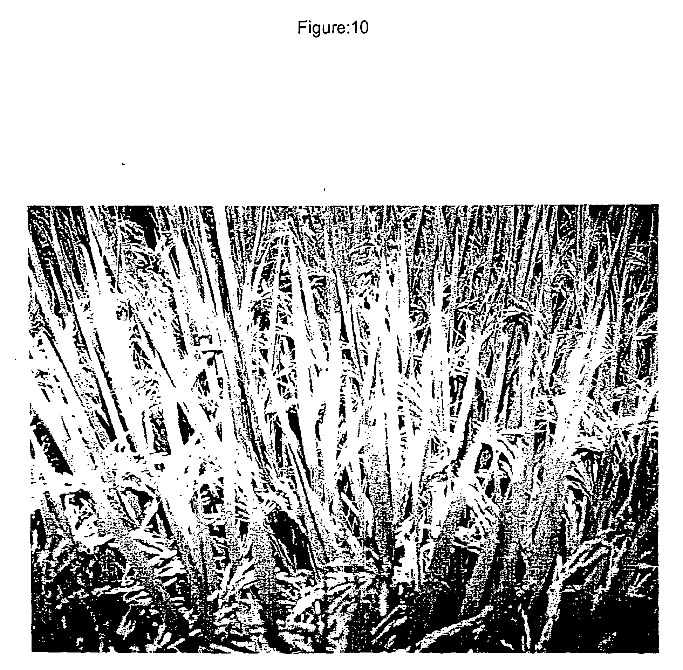

Figure 10 shows the rice crop raised by the above process with excellent results.

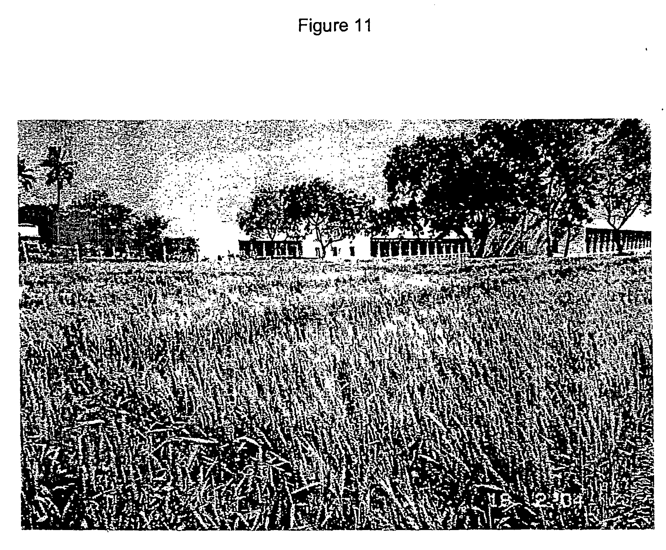

Figure 11 shows the wheat crop raised by the above process with excellent results.
Figure 12 shows the sub-soil mixed in the tank and supply of water along with sub-soil to the crop through irrigation.

### DESCRIPTION OF THE INVENTION:

Figure 1 depicts the width of the trench (1), the depth of the trench (2), the total land selected for cultivation (3), the trench made (4).

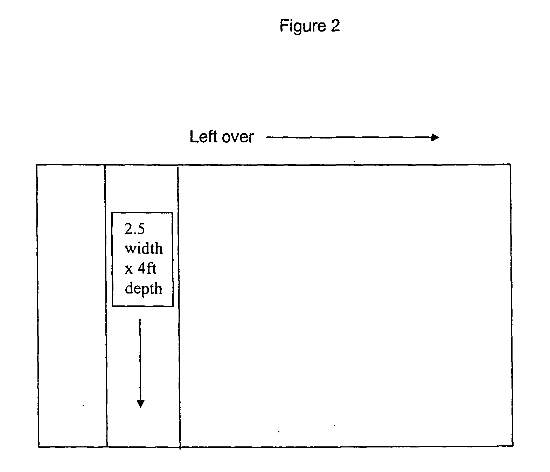

Figure 2 depicts the width of the trench (1), the depth of the trench (2), the total land selected for cultivation (3), the trench made in the subsequent year (5).

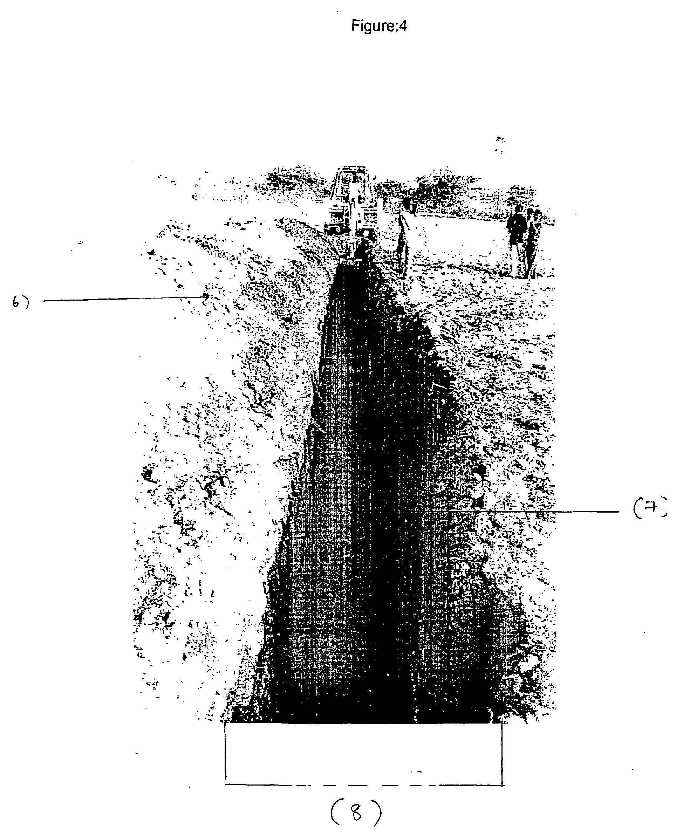

Figure 4 depicts the excavated soil (6), depth of trench (7), width of trench (8).

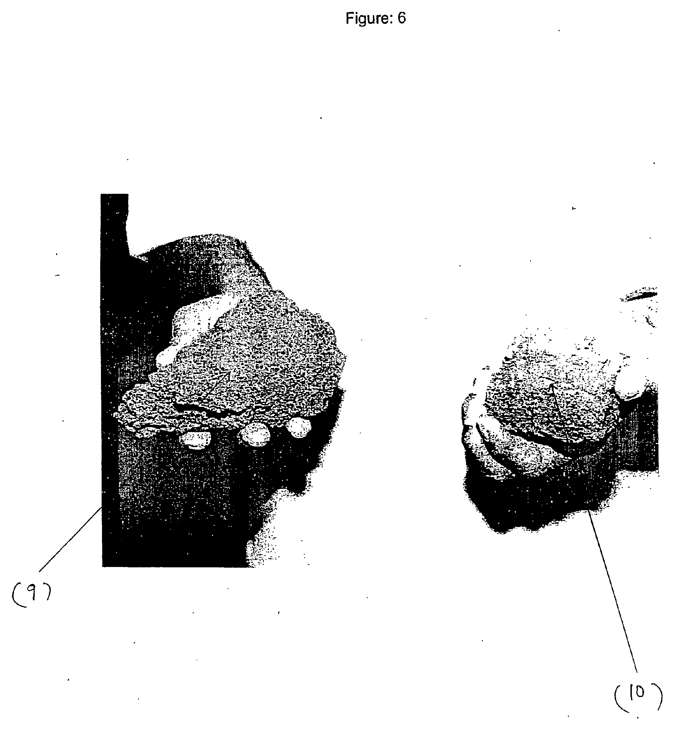

Figure 6 depicts the excavated soil sample (9), and topsoil sample (10).

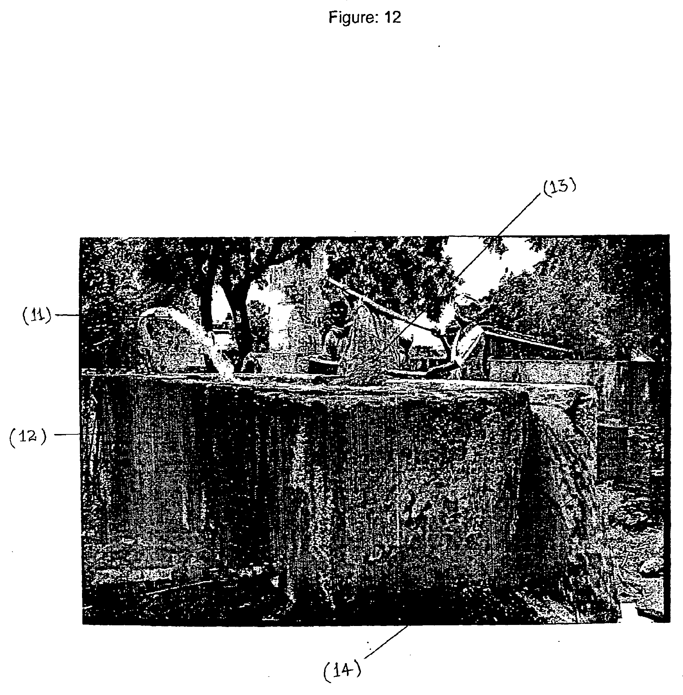

Figure 12 depicts the fresh water flow (11), tank (12), mixing of sub-soil (13), supply of water mixed with sub-soil (14).

As the inventor himself is a farmer / cultivator he has described his invention in his words to explain the process of increasing the nutrient content in the soil even after several cultivations in the same piece land.

To describe the process in a specific manner, here the inventor takes a hectare of land for cultivation. This land historically evidence of land management is that is was tilled and cultivated several times and many crops is raised several times. This land after several cultivations is called as the soil having low nutrient contents as the nutrients are earlier absorbed by the previous crops raised in this filed/land.

Now this land when is in the shape of a square or a rectangle is taken to a portion of 2.5 ft width and 4 ft depth length wise. This selected portion in the filed/land is dug to the predetermined level of 4 ft. The soil which came out is store at the rear side of the dig / pit.

Subsequently, with a machine or manually the surface soil present in the selected total land is removed to a depth of 2" to 6" inches and the whole soil such removed is filled in the dig/pit.

After filling the dig/pit the fresh soil earlier removed from the dig/pit is covered on the surface in the total land to a height of 4" to 6" inches in the place of the earlier removed surface soil. Now the total land is covered with a new soil or sub-soil soil dug from the bottom at one selected place in the same piece of land selected for cultivation/farming.

Now after the new spoil is covered. The surface is tilled to a depth of 6" (approx) so that the bottom old soil is mixed with the new soil and a blending is taken place.

In the present invention the inventor also gives the solution for the subsequent cultivations. In the next crop of cultivation the inventor has made the new trench next to the earlier one to get the new soil from the required depth. The next procedure of the removing the old soil and covering with sub-soil takes place.

With this process of the restoring soil fertility in depleted soils for every new cultivation, the same land is used to take the soil and cover in the same land. Moreover, if the total land is of 25' ft length the land can be used for a period of 10 crops approximately. And after which again the same procedure is continued from the starting where in with the period of 5-10 years the soil filled in the trenches regains the nutrient contents biologically.

It is important to note that no soil from any other external source has been put and the property of enhancing soil fertility was sourced from soil of the same plot/land. This is a unique case of ecological balancing without burdening natural resources.

The results of the both the soils are shown here:

| Descripti on | pH | EC | N/ kgha⁻¹ | P / kg ha⁻¹ | K/ kg ha⁻¹ | Fe / kg hA⁻¹ | Mn / kg ha⁻¹ | Cu / kg ha⁻¹ | Zn / kg ha⁻¹ |
|---|---|---|---|---|---|---|---|---|---|
| Top Soil before sowing | 7.74 | 0.278ds m⁻¹ | 177 | 17.9 | 288 | 2.46 | 4.29 | 0.91 | 1.35 |
| Sub-soil after application to field. | 8.06 | 0.176 dsm⁻¹ | 186 | 51.5 | 298 | 4.81 | 10.92 | 10.01 | 4.05 |
| Sub-soil after harvest of Wheat | 8.11 | 0.418 | 267 | 44.8 | 288 | 4.30 | 10.53 | 5.96 | 3.71 |

| | | | | | | | | | |
|---|---|---|---|---|---|---|---|---|---|
| EC: Electric conductivity, N : Nitrogen, K: Potassium, Fe: Ferrous, Mn: Manganese, Cu: Copper, Zn: Zinc | | | | | | | | | |

### EXAMPLES:

After the above process to increase the nutrient conditions of the soil in the cultivated land the inventor has practically studied by the under mentioned examples of cultivation;

### Practice for growing crop culture of rice:

### Soil Characters:

The soil was sandy loam locally known as chalka with a depth varying from 12 to 15 cms. Surface and sub surface soil samples were collected from the open field. Soil sample was also collected from a field to which 2 quintal castor cake + 100 kg bone meal plot⁻¹ of 1285 m² were added before transplanting paddy. The characters of these soils are given below:
Variety of rice crop:
Rice variety BPT 5204 (locally available variety), popularly known as "Samba Mahsuri" with fine grain, good milling and cooking quality was grown in this field. The variety is of 150 days average yield ad is known to be susceptible to both the insect pests and diseases. Te average yield of the variety is 5.0 to 5.5 t ha⁻¹ and it may reach upto 8.0 to 8.5 t ha⁻¹ under favourable conditions.

Raising the nursery:
The nursery of variety BPT 5204 was raised as per the recommendations. The nursery was sown on 18.07.2003. No inorganic fertilizers were applied to the nursery.

Transplantation:
The seedlings of 40 days old were pulled from the nursery and transplanted in the well prepared main field @ 2 to 3 seedlings per hill at random. A uniform populationof about 45 hills in 1m² were maintained in the main field.

Irrigation:
The rice crop was irrigated with bore well water. The farmer has kept the field semidry fewer days to minimize the irrigation and also to save water.

Fertilizers:
The inventor claims that he has not applied any inorganic fertilizers to the rice crop. Only castor cake and bone meal (farm by product) were applied to the field to obtain produce. The application of basal dose is prior to sowing only. The particulars are given below:

| | | |
|---|---|---|
| Area of the plot | | 1428 Sq Yards (1285 m²) |
| Castor cake | : | 200 kg |
| Bone meal | : | 100 kg |

The rice crop is transplanted into this field as per the recommended package of practices.

As per the package of practices the application of nitrogen is recommended during the flowering stage. However the inventor applied excavated sub-soil through the irrigation water at the rate one tonne per acre with an objective to enhance the yield levels of the crop.

No other fertilizer (chemical / organic) was applied.

Crop stand is vigorous, healthy and green. Physiologically, also crop is very active. No pest attack is observed. A prophylactic spray is given before kernel formation as other fields are infected.

The inventor recorded high yields of 10.31 t/ha as compared to expected average of 6.5 t/ha with fertilizers.

| RICE (BPT variety - ANGRAU) | Values obtained | Standard Values |
|---|---|---|
| Protein | 11.00 g/100g | 7.00 g/100g |
| Moisture | 8.74 g/100g | 10.63 g/100g |
| Yield | 10.31 t/ha | 6.5 t/ha |

| | | |
|---|---|---|
| ANGRAU: Acharya N.G.Ranga Agricultural Univeristy, Hyderabad, India released variety. Method of Testing: As per AOAC 17th Edition 2000 - Protein : 32.1.22(984.13). Standard results: Nirmatadevi et al, 2000, Genetic variability & Quality analysis, Bulletin of Grain Technology, vol.33, No.2, page 114-122. | | |

### Practice for growing crop culture of wheat:

Excavation of sub-soil from a small portion of channel on one side of a field. The channel is 2.5 feet wide, 4 deep trench (fig 1) and soil excavated with proclaimer (a trench digging machine). The topsoil to depth of 4" is scrapped and put into trench and covered. The excavated soil is spread on the field and basal dose of castor cake @1.4 tons /ha is applied. No chemical fertilizer as recommended by package of practices is added

### Data on nutritive status of soils:

| S.No | Description | pH | EC | N | P | K | Fe | Mn | Cu | Zn |
|---|---|---|---|---|---|---|---|---|---|---|
| | | | dS m⁻¹ | kg ha⁻¹ | | | mg kg-1 | | | |
| 1. | Top soil before sowing wheat | 7.74 | 0.278 | 177 | 17.9 | 288 | 2.46 | 4.29 | 0.91 | 1.35 |
| 2. | Sub soil excavated | 8.06 | 0.176 | 186 | 51.5 | 298 | 4.81 | 10.92 | 10.01 | 4.05 |
| 3. | Subsoil after spreading in the field and after crop harvest | 8.11 | 0.418 | 267 | 44.8 | 288 | 4.30 | 10.53 | 5.96 | 3.71 |

| | | | | | | | | | | |
|---|---|---|---|---|---|---|---|---|---|---|
| EC: Electric conductivity, N : Nitrogen, K: Potassium, Fe: Ferrous, Mn: Manganese, Cu: Copper, Zn: Zinc | | | | | | | | | | |

It is seen that the fertility status in topsoil is less than subsoil, which is showing high nutrient status.

The lower status of all nutrients except Nitrogen which is high due to application of castor cake shows the uptake of the nutrients to the crop which was good as per crop stand and healthy. The yields were 5.6 tons per hectare, which is high. The wheat crop, is not traditionality grown crop in this agro-climatic zone. Hence by this process of soil excavation and pulverizing into field, a crop not grown in such latertic soils can be grown with good yields with no other chemical inputs. The process is ecologically viable as depleted soils are regenerated by soil in the same plot and the grower need not invest in any inputs to increase yields or avert pest attack. The crop yields are also environmentally safe. The fodder straw was also found acceptable to the milch animals.

The nutritional status of grains is:

| WHEAT (Lok-1-MAHYCO) | Values obtained | Standard Values |
|---|---|---|
| Protein | 15.10 g/100g | 12.8g/100g |
| Moisture | 7.63 g/100g | 7.5 g/100g |
| Yield | 5.60 t/ha | 3.00 t/ha |

| | | |
|---|---|---|
| MAHYCO: Maharastra Hybrid Seeds Company, Jalna, Maharastra, India. Method of Testing: As per AOAC 17th Edition 2000 - Protein : 32.1.22(984.13). Standard results: As per the recommended package of practices by Maharastra Hybrid Seeds Company, India | | |

## Claims

1. A process of improving the nutrients of top soil, by digging a portion of land, called a trench, to a certain width and length in the same land, receiving therefrom a volume of sub soil and laying the received sub soil on the complete land as the top layer.

2. A process of improving the nutrients of top soil as claimed in claim 1, wherein the top layer spread as the new top soil is to a height of 4 to 6 inches.

3. A process of improving the nutrients of top soil as claimed in claim 1, wherein the soil used to spread is from the same selected land.

4. A process of improving the nutrients of top soil as claimed in claim 1, wherein before filling the new top layer on the land, the top layer of depleted soil is removed and filled in the trench made on one side of the land.

5. A process of improving the nutrients of top soil as claimed in claim 4, wherein the soil exchange is hand drawn or machine drawn.

6. A process of improving the nutrients of top soil as claimed in claim 1, wherein the trench made for removing the soil will be changed subsequently for each new cultivation, the new trench being next to the earlier one.

7. A process of improving the nutrients of top soil as claimed in claim 1, wherein after the top layer is filled with the new soil, is ploughed to blend the new and old soil available on the surface of the land.

8. A process of improving the nutrients of top soil as claimed in claim 1, wherein after the top layer is filled with new soil, castor cake is mixed through spreading widely on the top soil which has characters of anceliation and neutralizing the alkality.

9. A process of improving the nutrients of top soil as claimed in claim 8 wherein, the castor cake used is in powdered form.

## Patentansprüche

1. Verfahren zur Verbesserung der Nährstoffe von Pflanzenerde, Maßnahmen umfassend, die darin bestehen, einen Graben genannten Geländeteil in einer bestimmten Breite und einer bestimmten Länge in demselben Gelände auszuheben, von diesem eine Menge Unterboden zu erhalten und den erhaltenen Unterboden über dem gesamten Gelände als obere Schicht zu verteilen.

2. Verfahren zur Verbesserung der Nährstoffe von Pflanzenerde nach Anspruch 1, bei dem die als neue Pflanzenerde verteilte obere Schicht eine Höhe von 4 bis 6 Zoll hat.

3. Verfahren zur Verbesserung der Nährstoffe von Pflanzenerde nach Anspruch 1, bei dem die zur Verteilung verwendete Erde von demselben ausgewählten Gelände stammt.

4. Verfahren zur Verbesserung der Nährstoffe von Pflanzenerde nach Anspruch 1, bei dem die obere unfruchtbare Bodenschicht weggenommen und in den Graben eingebracht wird, der auf einer Seite des Geländes geschaffen wurde, bevor die neue obere Schicht auf dem Gelände verteilt wird.

5. Verfahren zur Verbesserung der Nährstoffe von Pflanzenerde nach Anspruch 4, bei dem der Erdaustausch manuell oder maschinell durchgeführt wird.

6. Verfahren zur Verbesserung der Nährstoffe von Pflanzenerde nach Anspruch 1, bei dem der zur Entfernung von Erde geschaffene Graben nach jeder neuen Kultur gewechselt wird, wobei der neue Graben neben dem vorhergehenden Graben liegt.

7. Verfahren zur Verbesserung der Nährstoffe von Pflanzenerde nach Anspruch 1, bei dem gepflügt wird, um die neue Erde und die alte Erde, die auf der Oberfläche des Geländes verfügbar sind, zu mischen, nachdem die obere Schicht mit der neuen Erde gefüllt wurde.

8. Verfahren zur Verbesserung der Nährstoffe von Pflanzenerde nach Anspruch 1, bei dem ein Rizinusölkuchen durch breite Verteilung auf der Pflanzenerde gemischt wird, der Eigenschaften zur Beseitigung und Neutralisierung des alkalischen Charakters hat, nachdem die obere Schicht mit der neuen Erde gefüllt wurde.

9. Verfahren zur Verbesserung der Nährstoffe von Pflanzenerde nach Anspruch 8, bei dem der verwendete Rizinusölkuchen in pulverisierter Form ist.

## Revendications

1. Procédé d'amélioration des nutriments de terre végétale comprenant les opérations consistant à creuser une partie de terrain, appelée une tranchée, à une certaine largeur et une certaine longueur dans le même terrain, recevoir à partir de celle-ci un volume de sous-sol et étaler le sous-sol reçu sur tout le terrain en tant que couche supérieure.

2. Procédé d'amélioration des nutriments de terre végétale, selon la revendication 1, dans lequel la couche supérieure étalée en tant que nouvelle terre végétale est à une hauteur de 4 à 6 pouces.

3. Procédé d'amélioration des nutriments de terre végétale, selon la revendication 1, dans lequel la terre utilisée pour l'étalement provient du même terrain sélectionné.

4. Procédé d'amélioration des nutriments de terre végétale, selon la revendication 1, dans lequel, avant de répandre la nouvelle couche supérieure sur le terrain, la couche supérieure de terre appauvrie est retirée et introduite dans la tranchée réalisée sur un côté du terrain.

5. Procédé d'amélioration des nutriments de terre végétale, selon la revendication 4, dans lequel l'échange de terre est effectué à la main ou à la machine.

6. Procédé d'amélioration des nutriments de terre végétale, selon la revendication 1, dans lequel la tranchée réalisée pour retirer la terre sera changée après chaque nouvelle culture, la nouvelle tranchée étant adjacente à la tranchée précédente.

7. Procédé d'amélioration des nutriments de terre végétale, selon la revendication 1, dans lequel, après que la couche supérieure est remplie de la nouvelle terre, on laboure pour mélanger la nouvelle terre et l'ancienne terre disponibles sur la surface du terrain.

8. Procédé d'amélioration des nutriments de terre végétale, selon la revendication 1, dans lequel, après que la couche supérieure est remplie de la nouvelle terre, un tourteau de ricin est mélangé par large dispersion sur la terre végétale qui a des caractères de suppression et de neutralisation du caractère alcalin.

9. Procédé d'amélioration des nutriments de terre végétale, selon la revendication 8, dans lequel le tourteau de ricin utilisé est sous forme pulvérulente.
